# EUROPEAN PATENT APPLICATION

(11) **EP 2 072 579 A1**
(43) Date of publication of application: **24.06.2009**
(21) Application number: 07024955.2
(22) Date of filing: 21.12.2007
(51) Int. Cl.: C08L 77/00, C08L 77/02, A61M 25/00, F16L 11/04, C08L 27/18

(54) **Co-extruded polymers of polyamide and poly-tetrafluoro-ethylene (PTFE) in medical devices**

(71) Applicant: Abbott Laboratories Vascular Enterprises Limited, Dublin 2 (IE)
(72) Inventor: Lorenz, Günter, 72072 Tübingen (DE)
(74) Representative: Peters, Hajo

(57) **Abstract**

The present invention refers to medical devices comprising co-extruded polymers of polyamide and poly-tetrafluoro-ethylene (PTFE), especially to tubings, used for constructing catheters like balloon catheters, especially like the inner member (forming the guide wire lumen) of catheters.

## Description

### Field of the invention

The present invention refers to medical devices comprising co-extruded polymers of polyamide and poly-tetrafluoro-ethylene (PTFE), especially to tubings, used for constructing catheters like balloon catheters, guide catheters or delivery catheters for self-expanding stents.

### Background of the invention

Angioplasty is an efficient and successful method of opening stenosis in the vascular system. In a popular form of angioplasty, a balloon catheter is advanced through the vascular system until the balloon, which is carried at the distal end of a catheter shaft, and which may carry an expandable stent, is positioned across the stenosis or damaged vessel. By inflating the balloon pressure is applied to the obstruction, which is moved by pressing it against the inner wall of the vessel, whereby the vessel is opened for improved flow. Due to the expansion of the balloon, the stent, which - if used - is situated on the balloon, is also expanded for aiding in repairing the vessel wall and hindering obstruction. As a last step the stent is then released by deflating the balloon reducing its circumference until refolding of the balloon occurs followed by removal of the balloon and catheter from the vessel along a guide wire.

There are various types of balloon catheters. One type is fed over a guide wire (i.e., "over-the-wire" catheters) and another type serves as its own guide wire ("fixed - wire" catheters). There have been developments of variations of these two basic types: the so-called "rapid exchange "type, "innerless" catheters, and others.

In another popular form of angioplastie selfexpanding stents are delivered to the target site in a vessel via a self-expanding stent delivery catheter. Usually the stent is covered by a sheath to keep it in the contracted configuration on the catheter until it reaches the target side. The sheath is then retracted in order to release the stent and the catheter is subsequently removed from the vessel.

If a catheter, like a balloon catheter, is used in percutaneous transluminal angioplasty (PTA) or percutaneous transluminal coronary angioplasty (PTCA), it is typically advanced through a guide catheter to a preselected vessel location, such as the aorta, for example. Using fluoroscopy, the surgeon advances the catheter until the balloon is located across the stenosis or obstruction. This may involve the use of a guide wire over which the catheter is moved or alternatively the catheter may act as its own guide wire. Besides the fact that a smooth advancement in the vessels is in itself very advantageously, a possible origin of trouble arriving from this advancement of the catheter is the friction between the wire and the inner lumen of the catheter when guiding the catheter along the wire. As the movement in the vessels is highly difficult and a task requiring great handling skills any resistance in addition to those unavoidable due to the nature of the vessels being penetrated is strictly unwanted. Accordingly besides smoothness of the catheter (tip) itself a smooth movement of the wire inside the catheter avoiding as much friction as possible is highly desired.

Polyamides or polyamide elastomers have been used in the polymer industry for a long time and - due to their enormous range of possible applications - are found in many branches of industrial products. Recently in the area of medicinal devices good use has been made of these materials especially in devices/implants like the balloons on a balloon catheter. The most popular polyamides used include different sorts of Nylons or Copolymers such as PEBA. Even though these materials have certainly been used successfully, due to the strains put on the materials and the necessity to improve their characteristics in the light of growing experience coming from increasing numbers of treated patients, there clearly is a need for improved materials allowing for an effective treatment of the patient minimizing risks, preferably with an economical production process.

### Summary of the invention

It is an object of the current invention to provide new medical devices using polymers showing the attributes wanted in their specific area of use. As the special focus of this invention is on the search for new materials to be used wherever low-friction characteristics and a high slideability is required. For example in the inner member, especially the guide wire lumen of medical devices like balloon catheters, used e.g. in PTA (percutaneous transluminal angioplasty) or PTCA (Percutaneous transluminal coronary angioplasty) a material showing the lowest amount of friction in contact with the guide wire is needed.

The invention thus refers to a medical device comprising a co-extruded polymer of polyamide and poly-tetrafluoro-ethylene (PTFE), especially to a catheter like a catheter with a balloon like those used in PTA/PTCA/angioplastic applications or a delivery catheter for delivery of medical devices or a guide catheter. Desirably this catheter is either entirely consisting of the co-extruded polymers of polyamide and poly-tetrafluoro-ethylene (PTFE) or only parts of the catheter are made of or comprise co-extruded polymers of polyamide and poly-tetrafluoro-ethylene (PTFE) according to the present invention. For example the inner member (forming the guide wire lumen) of a balloon catheter is consisting of the co-extruded polymers of polyamide and poly-tetrafluoro-ethylene (PTFE). Likewise other parts of the catheter shaft, the catheter tip, the balloon of a balloon catheter, or the sheath covering the stent in a delivery device for self-expanding stents may be made of or comprise co-extruded polymers of polyamide and poly-tetrafluoro-ethylene (PTFE). Medical devices, especially catheters entirely or in its inner member/guide wire lumen constructed from such co-extruded polymers of polyamide and poly-tetrafluoro-ethylene (PTFE) do show a greatly increased sliding property which in regards to the friction between guide wires is improved over those currently used in the state of the art. Furthermore the material besides thus being highly usable for tubings also generally shows a very good property for the production of injection molded parts with a complex geometry and good sliding properties in the area of medical devices, like heart valves or multi-lumen catheters. In addition the material shows an improved weldability, being otherwise often poor in other fluorine polymers, again making it a very suitable material for the manufacture of medical devices as described above. Desirably the co-extruded polymer of polyamide and poly-tetrafluoro-ethylene (PTFE) is obtainable by a co-extrusion using reactive extrusion, with prior irradiation of the - preferably micropowdered - PTFE at a mass temperature during reactive extrusion of 270 to 290 °C.

The invention further rests in a method for improving the sliding properties of a guide wire lumen in a catheter by providing a tubing of co-extruded polymers of polyamide and poly-tetrafluoro-ethylene (PTFE) for forming the guide wire lumen as inner member of the catheter.

The invention further rests in a method of producing a tubing used for medical devices in that the tubing material is comprising or consisting of co-extruded polymers of polyamide and poly-tetrafluoro-ethylene (PTFE) with the tubing being used forming the guide wire lumen as inner member of a catheter being used with a guide wire.

The invention further rests in the use of co-extruded polymers of polyamide and poly-tetrafluoro-ethylene (PTFE) in the manufacture of a medical device, desirably selected from stents, stent grafts, grafts, graft connectors or catheters, but most desirably from a catheter.

The invention also further rests in the use of a medical device according to the invention for the treatment of a disease, especially a cardiovascular disease, especially a stenosis, especially through minimal invasive surgery like PTCA.

In a further embodiment the invention is directed to a method of treatment of a disease, like a cardiovascular disease, especially a stenosis, using in a patient, being a mammal, especially a human, in need thereof a medical device according to the invention, desirably in minimal invasive surgery like PTCA.

### Detailed Description of the invention

The use of catheters as well as stents, balloons and other medical devices etc. in minimal invasive surgery, especially in the cardiovascular field, has in the last years shown a high growth. As a consequence the need for useful materials fulfilling highly specialized needs in the field of different medicinal devices has clearly risen in a technical area, which traditionally is more governed by bulk products. Especially in the field of vascular catheters being typically advanced through a guide catheter during PTCA, a material being easily producible as well as offering less friction, either in the outside of the catheter or between the wire and the inner lumen of the catheter when guiding the catheter along the wire is very desired.

There are 3 kinds of material used nowadays for medical devices, especially balloons.
a) Nylon: Nylon, coming in different sorts, especially Nylon-12, are not very flexible and/or have a relatively high water absorption. Especially the lack of flexibility is often considered as a drawback in medical devices using Nylon.
b) PEBA: PEBA (e.g. PEBAX^{®}) are often too flexible and/or have a relatively high water absorption In addition PEBA lacks stability, especially in regards to the thermo-oxidation and/or sometimes also lack dimensional stability.
c) Blend of a) and b): The need for a compromise between the higher rigidity of Nylon and higher flexibility of PEBA has already resulted in blends being used. A disadvantage of blends is that the phases tend to show phase separation that leads to unstable morphology.

None of these does show an optimal behavior, especially if used for catheters or the inner member of catheters, so that still there is a high need for appropriate material for medical devices, especially for catheters.

The invention thus refers to a medical device comprising a co-extruded polymer of polyamide and poly-tetrafluoro-ethylene (PTFE). Thereby it is preferred if the medical device according to the invention is selected from minimal invasive medical devices, preferably stents, stent grafts, grafts, graft connectors or catheters, most preferably the medical device is a catheter being used with a guide wire or a catheter being used with a guide wire and carrying a balloon or a guide catheter or a catheter comprising a retractable sheath.

Most desirably in the catheter using a guide wire the surface of the guide wire lumen of the catheter is consisting of a co-extruded polymer of polyamide and poly-tetrafluoro-ethylene (PTFE), preferably the inner member forming the guide wire lumen is consisting of the co-extruded polymer of polyamide and poly-tetrafluoro-ethylene (PTFE).

These medical devices constructed from the co-extruded polymers of polyamide and poly-tetrafluoro-ethylene (PTFE) do show a greatly increased sliding property. For example in catheters made entirely or in its inner member/guide wire lumen from co-extruded polymers of polyamide and poly-tetrafluoro-ethylene (PTFE) the friction between the guide wire and the guide wire lumen wall is improved over those currently used in the state of the art. Furthermore the material besides thus being highly usable for tubings also generally shows a very good property for the production of injection molded parts with a complex geometry and good sliding properties in the area of medical devices, like heart valves or multi-lumen catheters. In addition the material shows an improved weldability, being otherwise often poor in other fluorine polymers, again making it a very suitable material for the manufacture of medical devices as described above.

"Co-extruded polymer of polyamide and poly-tetrafluoro-ethylene (PTFE)" according to this invention is being defined as a polymer which is obtained by extrusion of a mixture of a polyamide and PTFE being mixed before extrusion.

"Stent" means an elongate implant with a hollow interior and at least two orifices and usually a circular or elliptical, but also any other, cross section, preferably with a perforated, lattice-like structure that is implanted into vessels, in particular blood vessels, to restore and maintain the vessels patent and functional.

"Graft" means an elongate implant with a hollow interior and with at least two orifices and usually circular or elliptical, but also any other, a cross section and with at least one closed polymer surface which is homogeneous or, optionally, woven from various strands. The surface preferably is impermeable to corpuscular constituents of blood and/or for water, so that the implant serves as a vascular prosthesis and is usually employed for damaged vessels or in place of vessels.

"Stent graft" means a connection between a stent and a graft. A stent graft preferably comprises a vascular prosthesis reinforced with a stent (both as defined above), wherein a polymer layer is homogeneous or, optionally, woven, knitted plaited etc. from various strands and is either impermeable for corpuscular constituents of blood and/or for water or can also be permeable. More preferably, the stent has on at least 20% of its surface a perforated (lattice-like), preferably metallic, outer layer and at least one closed polymer layer that is located inside or outside the stent outer layer. The closed polymer layer may be homogeneous or, optionally, woven from various strands, and is impermeable for corpuscular constituents of blood and/or for water. Optionally, where the closed polymer layer is disposed inside the metallic outer layer, a further perforated (lattice-like), preferably metallic, inner layer may be located inside the polymer layer.

"Graft connector" means an implant that connects at least two hollow organs, vessels or grafts, consists of the materials defined for grafts or stent grafts and/or has the structure defined for the latter. Preferably, a graft connector has at least two, three or four, orifices, arranged, for example, as an asymmetric "T" shape.

"Catheter" means a tubular instrument intended for introduction into hollow organs. More preferably, a catheter may be designed for use in guiding other catheters, or for angiography, ultrasound imaging, or - especially - balloon catheters for dilatation or stent delivery. This includes also a "Catheter pump" meaning a catheter provided on its tip with a propeller able to assist the pumping of the myocardium.

In a preferred embodiment of the medical device according to the invention the co-extruded polymer of polyamide and poly-tetrafluoro-ethylene (PTFE) is obtainable by a co-extrusion using reactive extrusion. Desirably the mass temperature during reactive exrusion is below the melting temperature of PTFE, preferably is 220°C to 300°C, more preferably is 270 to 290 °C.

In a preferred embodiment of the medical device according to the invention the poly-tetrafluoro-ethylene (PTFE) is irradiated prior to co-extrusion with the polyamide, whereby the poly-tetrafluoro-ethylene (PTFE) is irradiated with an irradiation dose between 200 and 4000 kGy, preferably between 400 and 2000 kGy. Desirably the PTFE is micropowdered prior to co-extrusion with the polyamide.

In a preferred embodiment of the medical device according to the invention the polyamide is Nylon, preferably is Nylon 12 or Nylon 6, most preferably is Nylon 6.

Another aspect of the invention relates to a method for improving the sliding properties of a guide wire in a catheter by providing for forming the guide wire lumen of the catheter an inner member comprising or consisting of co-extruded polymers of polyamide and poly-tetrafluoro-ethylene (PTFE).

A further aspect of the invention refers to a method of producing a tubing used for medical devices wherein the tubing material is comprising or consisting of co-extruded polymers of polyamide and poly-tetrafluoro-ethylene (PTFE) and the tubing material is consequentually glued, thermally welded or laser welded to form the final tubing. Desirably the tubing is used in a catheter, preferably in a catheter being used with a guide wire, preferably is forming the inner member forming the guide wire lumen of a catheter being used with a guide wire.

Another important aspect of the invention refers to the use of co-extruded polymers of polyamide and poly-tetrafluoro-ethylene (PTFE) in the manufacture of a medical device. Desirably the medical device is selected from implanted or implantable medical devices, preferably stents, stent grafts, grafts, graft connectors or catheters, more preferably is a catheter, most preferably is a catheter being used with a guide wire or a catheter being used with a guide wire and carrying a balloon, most preferably is a catheter using a guide wire with the inner member forming the guide wire lumen consisting of the co-extruded polymer of polyamide and poly-tetrafluoro-ethylene (PTFE).

A further aspect of the invention relates to the use of a medical device according to the invention, for the treatment of a disease, especially a cardiovascular disease, especially a stenosis.

Another aspect and embodiment of the current invention is directed to a method of treatment of a disease, like a cardiovascular disease, especially a stenosis, using in a patient, being a mammal, especially a human, in need thereof a medical device according to the invention, desirably in minimal invasive surgery like PTCA.

The examples in the following section are merely illustrative and the invention cannot be considered in any way as being restricted to these applications.

### Examples:

### Example 1: Material produced by Co-extrusion of polyamide with PTFE

This production process is described in detail in Pompe et al. (J. applied polymer Science 98; (2005) 1308-1316 and J. applied polymer Science 98; (2005) 1317-1324) included herein in its entirety by reference.

Briefly as a basic matrix Polyamide 6 (PA6 Miramid SH3 (Leuna GmbH, Leuna Germany) with a weight average molecular weight of 18,000 g/mol was used. The PTFE part was used as a micropowder like Zonyl MP1600 and Zonyl MP1100 (both DuPont, Wilmington (DE), USA), as well as PTFE TF 2025 (from Dyneon GmbH, Burgkirchen, Germany) with a non-irradiated MW of ≈10⁶ g/mol. Irradiation was performed at ambient temperature in air with various doses ranging from 500 to 2000 kGy. The compounds were used in a 50/50 (wt% / wt%) composition and processed in a twinscrew extruder with either a higher or a lower shear rate and a throughput of 6 kg/h. The processing (mass) temperature was in the range of 285°C (being lower than the PTFE melting temperature).

Irradiation caused chain scission in the molecules, so that as a consequence the molecular weight decreased. Simultaneously, carbonyl fluoride (-COF) and, by hydrolysis during the posttreatment at 200°C for 1 h in air, carboxylic end groups (-COOH) were formed. With the processing (mass) temperature being around 285°C (being lower than the PTFE melting temperature), most of the crystallites in the PTFE phase were not molten during processing. The processing conditions and the reactive groups formed during irradiation influenced the degree of dispersion of the PTFE phase and the adhesion between PTFE and PA by the formation of PTFA/PA block copolymers, with the irradiation dose being most influential.

As one example the compound using the lower shear rate but 2000 kGy irradiation on the PTFE compound had a very homogeneous particle size distribution with an average value for particle size being 820 nm.

### Example 2: Forming a medical device from tubings by laser welding

The material from example 1 is formed into a tube in an extrusion process using reactive extrusion as described above to form a tubing. This tubing is finally - during catheter assembly - laser welded to form the inner member of the catheter, thus forming the guide wire lumen.

### Example 3: Forming a medical device from tubings by thermal welding

The material from example 1 is formed into a tube in an extrusion process using reactive extrusion as described above to form a tubing. This tubing is finally - during catheter assembly - thermally welded to form the inner member of the catheter, thus forming the guide wire lumen.

## Claims

1. Medical device comprising a co-extruded polymer of polyamide and poly-tetrafluoro-ethylene (PTFE).

2. Medical device according to claim 1, wherein the medical device is selected from vascular devices, preferably stents, stent grafts, grafts, graft connectors or catheters, more preferably is a catheter, most preferably is a catheter being used with a guide wire or a catheter being used with a guide wire and carrying a balloon or a guide catheter or a catheter comprising a retractable sheath.

3. Medical device according to claim 2, wherein in the catheter using a guide wire the inner surface of the guide wire lumen of the catheter is consisting of a co-extruded polymer of polyamide and poly-tetrafluoro-ethylene (PTFE), preferably the inner member forming the guide wire lumen is consisting of the co-extruded polymer of polyamide and poly-tetrafluoro-ethylene (PTFE).

4. Medical device according to any of claims 1 to 3, wherein the co-extruded polymer of polyamide and poly-tetrafluoro-ethylene (PTFE) is obtainable by a co-extrusion using reactive extrusion.

5. Medical device according to any of claims 1 to 4, wherein the poly-tetrafluoro-ethylene (PTFE) is irradiated prior to co-extrusion with the polyamide.

6. Medical device according to claim 5, wherein the poly-tetrafluoro-ethylene (PTFE) is irradiated with an irradiation dose between 200 and 4000 kGy, preferably between 400 and 2000 kGy.

7. Medical device according to any of claims 4 to 6, wherein the mass temperature during reactive extrusion is below the melting temperature of PTFE, preferably is 220°C to 300°C, more preferably is 270 to 290 °C.

8. Medical device according to any of claims 1 to 7, wherein the polyamide is Nylon, preferably is Nylon 12 or Nylon 6, most preferably is Nylon 6.

9. Medical device according to any of claims 1 to 8, wherein the PTFE is micropowdered prior to co-extrusion with the polyamide.

10. A method for improving the sliding properties of a guide wire lumen in a catheter by providing for forming the guide wire lumen of the catheter an inner member comprising or consisting of co-extruded polymers of polyamide and poly-tetrafluoro-ethylene (PTFE).

11. A method of producing a tubing used for medical devices in that the tubing material is comprising or consisting of co-extruded polymers of polyamide and poly-tetrafluoro-ethylene (PTFE) by coectrusion.

12. A method according to claim 11, wherein the tubing is used in a catheter, preferably in a catheter being used with a guide wire, preferably is forming the inner member forming the guide wire lumen of a catheter being used with a guide wire.

13. Use of co-extruded polymers of polyamide and poly-tetrafluoro-ethylene (PTFE) in the manufacture of a medical device.

14. Use according to claim 13, wherein the medical device is selected from vascular devices, preferably stents, stent grafts, grafts, graft connectors or catheters, more preferably is a catheter, most preferably is a catheter being used with a guide wire or a catheter being used with a guide wire and carrying a balloon or a guide catheter or a catheter comprising a retractable sheath, most preferably is a catheter using a guide wire with the inner member forming the guide wire lumen, the guide wire lumen consisting of the co-extruded polymer of polyamide and poly-tetrafluoro-ethylene (PTFE).

15. Use of a medical device according to any of claims 1 to 9, for the treatment of a disease, especially a cardiovascular disease, especially a stenosis.
